# EUROPÄISCHE PATENTSCHRIFT

(11) **EP 0 773 250 B1**
(45) Veröffentlichungstag und Bekanntmachung des Hinweises auf die Patenterteilung: **27.01.1999**
(21) Anmeldenummer: 96117828.2
(22) Anmeldetag: 07.11.1996
(51) Int. Cl.: C08G 77/38, C09K 19/06, C09K 19/38, C09D 183/04

(54) **Chirale Dianhydrohexit-Derivate enthaltende flüssigkristalline Organosiloxane**
Chiral dianhydro hexite derivative containing liquid-crystalline organosiloxanes
Organosiloxanes liquides cristallins contenant des groupements à base de dérivésde dianhydrohexite chiraux

(30) Priorität: 09.11.1995 DE 19541820
(43) Veröffentlichungstag der Anmeldung: 14.05.1997
(73) Patentinhaber: Consortium für Elektrochemische Industrie GmbH, 81379 München (DE)
(72) Erfinder: Schierlinger, Christian, Dr., 84533 Marktl. (DE); Winkler, Rainer, 81669 München (DE); Stowischek, Klaus, 84478 Waldkraiburg (DE)
(74) Vertreter: Fritz, Helmut, Dr.

(56) Entgegenhaltungen:
- DE-A- 4 234 845
- DE-A- 4 342 280
- DE-A- 4 408 171
- US-A- 5 211 877
- MAKROMOLEKULARE CHEMIE, MACROMOLECULAR CHEMISTRY AND PHYSICS, Bd. 179, 1978, Seiten 829-832, XP000615415 FINKELMANN H ET AL: "SYNTHESIS OF CHOLESTERIC LIQUID CRYSTALLINE POLYMERS POLYREACTIONS IN ORDERED SYSTEMS, 15"

## Beschreibung

Die vorliegende Erfindung betrifft flüssigkristalline Organosiloxane, die Dianhydrohexit-Derivate als chirale Gruppen aufweisen, ein Verfahren zu deren Herstellung, deren Verwendung, Dianhydrohexit-Derivate, zu flüssigkristallinen Dianhydrohexit-Derivate enthaltenden Organosiloxanen kondensierbare Organosilane und Mischungen von Dianhydrohexit-Derivate enthaltenden Organosiloxane mit anderen flüssigkristallinen Materialien, sowie Anwendungen mit diesen Mischungen.

Flüssigkristallmaterialien mit einer helikalen Struktur besitzen im allgemeinen smektische, nematische oder cholesterische Phasen. Flüssigkristallgemische enthalten häufig eine oder mehrere optisch aktive Komponenten zur Induktion einer chiralen Struktur. Beispielsweise können cholesterische Flüssigkristalle aus einem nematischen Basismaterial und einem oder mehreren optisch aktiven Dotierstoffen bestehen. Dabei erzeugen diese im Nematen entweder eine rechts- oder linkshändige Verdrillung. Cholesterische Flüssigkristalle reflektieren Licht in einem Wellenbereich, für den die Wellenlänge etwa gleich der Helixganghöhe ist ( λ = n · p). Das reflektierte Licht ist vollständig zirkular polarisiert. Die Drehrichtung des reflektierten Lichts hängt vom Drehsinn der cholesterischen Helixstruktur ab. Das jeweils entgegengesetzte zirkular polarisierte Licht wird ungeschwächt transmittiert. Eine große Zahl optisch aktiver Dotierstoffe, die sich mehr oder weniger gut für bestimmte Zwecke eignen, sind in der Literatur beschrieben.

Für einige optische Anwendungen von flüssigkristallinen Materialien, z.B. in Notch-Filtern, ist es notwendig, cholesterische Phasen mit rechts- als auch solche mit linkshändiger Helix zu besitzen, um sowohl links- als auch rechtszirkular polarisiertes Licht reflektieren zu können. Für linkshelikale Filter wird dabei häufig auf Cholesterinverbindungen zurückgegriffen, die außer der Chiralität eine ausreichend mesogene Eigenschaft mitbringen, um eine stabile Mesophase zu erzeugen. Dazu eigenen sich beispielsweise die aus H. Finkelmann, H. Ringsdorf et al., in Makromol. Chem. 179, 829-832(1978) bekannten Cholesterinderivate oder die aus US-A 4,996,330 und EP-A-626 386 bekannten Weinsäureimid-Derivate. Bei der Darstellung von rechtshelikalen Filtern wurde bislang in der Regel auf nichtsteroidale Systeme zurückgegriffen. Diese Systeme haben meist keine ausreichende Mesophasenstabilität oder eine zu geringe Langzeitstabilität. Ein geeignetes rechtshelikales Steroid-System wird in DE-A-42 34 845 beschrieben. Das dort beschriebene Cholest-8(14)-en-3β-ol (Doristerol) bzw. dessen Derivate haben allerdings den Nachteil einer komplizierten Synthese und eines hohen Herstellungspreises.

Niedermolekulare Systeme eignen sich nur für begrenzte Anwendungen, wie optische Elemente, für Anwendungen im Dekobereich oder in optischen Filtern. Oft ist ihre Phasenstabilität zu gering, die Viskosität zu niedrig oder insbesondere die Temperaturstabilität in keiner Weise gewährleistet.

Polymere bzw. vernetzte cholesterische Flüssigkristalle ermöglichen weitergehende Anwendungen. Aus ihnen können LC-Pigmente mit neuartigen Effekten oder reflektierende Polarisationsfilter und vieles mehr hergestellt werden.

In DE-A-43 42 280 bzw. DE-A-44 08 171 werden vernetzbare, monomere Hexit-Derivate bzw. Mischungen von monomeren Hexit-Derivaten mit anderen flüssigkristallinen Verbindungen beschrieben. Die monomeren Hexit-Derivate können als monomere Dotierstoffe zur Herstellung von cholesterischen Netzwerken eingesetzt werden. Die dort beschriebenen, Hexithaltigen Systeme sind nur durch aufwendige Synthesen zugängig. Die in DE-A-43 42 280 beschriebenen monomeren Hexit-Derivate können über Vinyl- oder Epoxidreste polymerisiert werden. Die in DE-A-44 08 171 beschriebenen Mischungen von monomeren Hexit-Derivaten können durch radikalische oder ionische Polymerisationsverfahren vernetzt werden.

Flüssigkristalle, welche aus einem Organosiloxangerüst bestehen, welches mesogene Seitengruppen trägt, zeichnen sich gegenüber nicht siloxanhaltigen LC-Systemen dadurch aus, daß sich durch die Wahl des Organosiloxanrückgrats das Molekulargewicht einfach und nahezu beliebig variieren läßt. Dadurch können die flüssigkristallinen Eigenschaften, wie z.B. Phasenverhalten, Glaspunkt und Klärpunkt oder beispielsweise auch die Viskosität, in weiten Bereichen den Erfordernissen angepaßt werden.

In beispielsweise US-A 5,211,877, DE-A-42 34 845 und EP-A-626 386 sind cyclische Siloxane mit mesogenen Seitengruppen beschrieben, bei denen ein Teil der Seitengruppen mit Methacrylsäure verestert ist. Deshalb lassen sich diese Siloxane auch vernetzen. Die in diese Polymere eingearbeiteten Dotierstoffe sind u.a. hydrosilylierte ω-Olefinderivate von Cholesterin, Doristerol bzw. Weinsäureimiden. Diese weisen aber nur ein relativ geringes Verdrillungsvermögen ("helical twisting power" = HTP) auf und müssen daher in größeren Mengen (> ca. 10-20 %) zugesetzt werden, um z. B. Farbeffekte im sichtbaren Bereich hervorzurufen. Durch die große Menge an Dotierstoff kann die Vernetzergruppendichte nicht sehr hoch gewählt werden. Die chiralen Dotierstoffe sind darüber hinaus verhältnismäßig teuer oder nur in vielstufigen Synthesen zugänglich.

Aufgabe der vorliegenden Erfindung war es, rechts- und linkshelikale flüssigkristalline Organosiloxane bereitzustellen, die anstelle der bisher eingesetzten chiralen Dotierstoffe geeignetere Chiralika mit höherer HTP enthalten, im Temperaturbereich von Raumtemperatur bis etwa 100 °C eine stabile oder durch Vernetzung fixierbare cholesterische Phase besitzen, eine selektive Reflexion von rechts- bzw. linkshändig polarisiertem Licht ermöglichen und deren Reflexionswellenlänge weitgehend temperaturunabhängig ist.

Die vorstehend genannten Aufgaben werden durch die vorliegende Erfindung gelöst durch flüssigkristalline Organosiloxane, die Dianhydrohexit-Derivate als chirale Gruppen aufweisen.

Die flüssigkristallinen Organosiloxane weisen pro Dianhydrohexitgruppe eine deutlich höhere HTP und damit ein besseres optisches Drehvermögen als die bisher beschriebenen Steroid- und Weinsäureimidhaltigen flüssigkristallinen Organosiloxane auf, so daß zur Erzielung der gleichen optischen Wirkung, beispielsweise zur Erzielung der gleichen Reflexionswellenlänge erheblich geringere Mengen an chiralen Dianhydrohexit-Derivaten als chirale Komponente eingesetzt werden müssen.

Die flüssigkristallinen Organosiloxane weisen darüber hinaus eine deutlich größere HTP und damit ein besseres optisches Verdrillungsvermögen pro Dianhydrohexitgruppe auf, als die niedermolekularen Dianhydrohexitderivate, so daß zur Erzielung der gleichen optischen Wirkung geringere Mengen an Dianhydrohexitgruppen eingesetzt werden müssen. Die in der EP-A-626 386 beschriebenen cyclischen Organosiloxane mit Weinsäureimidresten zeigen im Vergleich zu den entsprechenden niedermolekularen Weinsäureimidderivaten keine größere HTP.

Dianhydrohexite sind als Dianhydro-Derivate von Zuckeralkoholen mit zwei Hydroxylgruppen ausgestattet und damit bifunktionell. Damit lassen sie sich mit den Methoden der organischen Chemie leicht in nahezu beliebiger Art und Weise derivatisieren.

Abhängig von den weiteren, an das Organosiloxan hydrosilylierten Verbindungen kann nach Orientierung bei Raumtemperatur, nach Orientierung oberhalb der Glastemperatur und anschließendem Abschrecken in den Glaszustand oder durch Fixierung der Orientierung durch Polymerisation bei Raum- bzw. erhöhter Temperatur eine stabile, cholesterische Phase erhalten werden. Mit den Dianhydrohexit-Derivate enthaltenden flüssigkristallinen Organosiloxanen kann sowohl eine Rechts- als auch eine Linkshelix induziert werden. Sowohl die links- als auch die rechtshelikalen, flüssigkristallinen Organosiloxane zeigen eine selektive Reflexion von links- bzw. rechtshändig polarisiertem Licht.

Vorzugsweise enthalten die flüssigkristallinen Organosiloxane neben den chiralen Dianhydrohexit-Derivaten als chirale Komponente noch andere mesogene Reste, die die nachträgliche radikalische oder ionische Vernetzung ermöglichen.

Durch Verändern des Gehalts an chiralen Dianhydrohexithaltigen Resten und des Verhältnisses von Dianhydrohexithaltigen Resten zu anderen mesogenen Resten in den flüssigkristallinen Organosiloxanen kann die Reflexionswellenlänge der selektiven Reflexion eingestellt werden. Aufgrund der großen HTP-Werte benötigt man nur einen Anteil von 2-10 Mol-%, bezogen auf alle in den Organosiloxanen vorhandenen mesogenen Reste an Dianhydrohexit-haltigen Resten, um eine Reflexion im sichtbaren Bereich zu erhalten, während bei den entsprechenden cholesterinhaltigen Organosiloxanen zwischen 40 und 50 Mol-% Cholesterylreste und bei den entsprechenden weinsäureimidhaltigen Organosiloxanen zwischen 10 und 20 Mol-% Weinsäureimidreste benötigt werden.

Die Dianhydrohexit-Derivate enthalten eine der existierenden Dianhydrohexit-Gruppen, nämlich Dianhydrosorbit, Dianhydromannit bzw. Dianhydroidit mit den Formeln 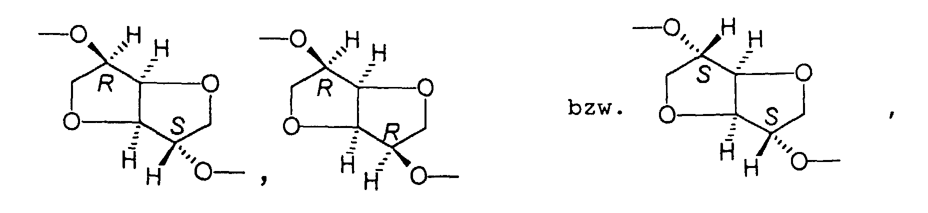 wobei die Bezeichnungen **R** und **S** die absolute Konfiguration entsprechend der R/S-Nomenklatur nach Cahn, Ingold und Prelog am jeweiligen Kohlenstoffatom definieren.

Vorzugsweise weisen die flüssigkristallinen Organosiloxane pro Molekül mindestens ein Si-C gebundenes Dianydrohexit-Derivat der allgemeinen Formel (1)

M¹- Hexit - M² (1),

als chirale Komponente auf, in der
- **Hexit**: eine der vorstehenden Dianhydrohexit-Gruppen,
- **M**^{**1**}: einen Rest der allgemeinen Formel (2),

R¹-(A¹)ₐ-Z¹ ᵣ-(A²)_{b}-X¹- (2)

und
- **M**^{**2**}: einen Rest der allgemeinen Formel (2) oder einen Rest der allgemeinen Formel (3),

R²-R³-(A³)_{c}-Z² ₛ-(A⁴)_{d}-X²- (3)

bedeuten, wobei in den vorstehenden allgemeinen Formeln (2) und (3)
- **R**^{**1**} und **R**^{**3**}: jeweils einen Rest der Formel CₙHₘ bedeuten, wobei eine oder mehrere, nicht benachbarte Methyleneinheiten durch Sauerstoffatome oder Dimethylsilylreste ersetzt sein können,
- **R**^{**2**}: eine polymerisierbare ethylenisch ungesättigte oder Alkoxysiloxygruppe oder Cholesterylrest, Doristerolrest, Halogenatom, Wasserstoffatom, Hydroxyl-, Nitril-, und Trialkylsiloxygruppe, deren Alkylreste jeweils 1 bis 8 Kohlenstoffatome besitzen,
- **A**^{**1**}**, A**^{**2**}**, A**^{**3**} und **A**^{**4**}: gleiche oder verschiedene zweibindige Reste aus der Gruppe 1,4-Phenylen-, 1,4-Cyclohexylenreste, substituierte Arylene mit 6 bis 10 Kohlenstoffatomen, substituierte Cycloalkylene mit 3 bis 10 Kohlenstoffatomen und Heteroarylene mit 5 bis 10 Kohlenstoffatomen,
- **X**^{**1**} und **X**^{**2**}: gleiche oder verschiedene zweibindige Reste aus der Gruppe -OCO-, -NHCO-, -CO- oder einen Rest **R**^{**1**},
- **Z**^{**1**} und **Z**^{**2**}: gleiche oder verschiedene zweibindige Reste aus der Gruppe -(CH₂)_{q}-, -COO-, -CH=CH-, -N=N-, -N=N(O)-, -OCO-, -CH₂CO-, -COCH₂-, -CH₂-O-, -O-CH₂-, -CH₂-NH-, -NH-CH₂-, -CONH-, -NHCO-, -N=CH- oder -CH=N-,
- **a, b, c** und **d**: jeweils gleiche oder verschiedene ganze Zahlen im Wert von 0, 1, 2 oder 3,
- **n**: eine ganze Zahl im Wert von 0 bis 20,
- **m**: den Wert von 2n besitzt, oder, falls n mindestens 2 bedeutet, auch den Wert von (2n-2) besitzen kann,
- **q**: eine ganze Zahl im Wert von 1, 2 oder 3,
- **r** und **s**: jeweils eine ganze Zahl im Wert von 0 oder 1 bedeuten.

Die flüssigkristallinen Organosiloxane sind vorzugsweise gemäß den allgemeinen Formeln (4) bis (6), 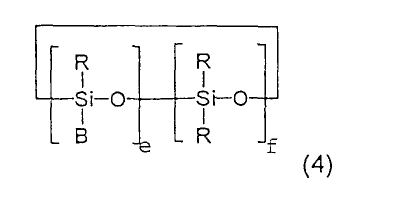 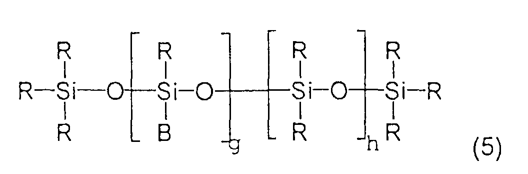 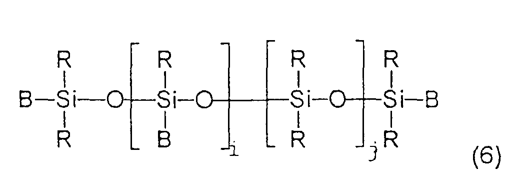 aufgebaut, in denen
- **B**: einen Rest der allgemeinen Formel (1) und gegebenenfalls einen Rest der allgemeinen Formel (7)

R⁴-(A⁵)ₓ-Z³ ₜ-(A⁶)_{y}-Z⁴ ᵤ-(A⁷)_{z}-A⁸ (7),

bedeutet, wobei in den vorstehenden Formeln (4) bis (7):
- **R**: gleiche oder verschiedene, gegebenenfalls substituierte C₁- bis C₁₈-Kohlenwasserstoffreste,
- **e** und **g**: jeweils eine ganze Zahl im Wert von 1 bis 100
- **f, h, i** und **j**: jeweils eine ganze Zahl im Wert von 0 bis 100,
- **R**^{**4**}: die Bedeutungen von **R**^{**1**},
- **A**^{**5**}, **A**^{**6**} und **A**^{**7**}: die Bedeutungen von **A**^{**1**},
- **Z**^{**3**} und **Z**^{**4**}: die Bedeutungen von **Z**^{**1**},
- **A**^{**8**}: gesättigte oder olefinisch ungesättigte gegebenenfalls substituierte Alkyl-, Alkoxy- oder Cycloalkylreste mit jeweils 1-16 Kohlenstoffatomen, Cholestanreste, Cholesterylreste, Doristerolreste, Halogenatome, Wasserstoffatome, Hydroxyl-, Nitril-, (Meth)acryloxy-, (Meth)acryloxyethylenoxy-, (Meth)acryloxydi(ethylenoxy)- , (Meth)acryloxytri(ethylenoxy)-, R- oder S-Tetrahydrofurancarbonsäureester und Trialkyl-, oder Trialkoxysiloxygruppen, deren Alkyl- bzw. Alkoxyreste 1 bis 8 Kohlenstoffatome besitzen,
- **x, y** und **z**: jeweils gleiche oder verschiedene ganze Zahlen im Wert von 0, 1, 2 und 3 und
- **t** und **u**: die Bedeutungen von **r** aufweisen,
mit der Maßgabe, daß die Summe **e + f** mindestens 2 beträgt.

Beispiele für **R**^{**1**}, **R**^{**3**} und **R**^{**4**} sind lineare oder verzweigte, gesättigte zweiwertige Alkylreste, die durch Einheiten [O(CH₂)ᵥ]_{w} unterbrochen oder ersetzt sein können, wobei **v** und **w** vorzugsweise jeweils gleiche oder verschiedene ganze Zahlen im Wert von 1, 2, 3 und 4 sind. Beispielsweise kann die Einheit [O(CH₂)ᵥ]_{w} ein Polyethylenglykol/Polypropylenglykol Blockcopolymeres sein. Insbesondere hat **n** einen Wert von 3, 4, 5 oder 6 und vorzugsweise hat **m** den Wert 2n.

Die polymerisierbaren ethylenisch ungesättigten Gruppen **R**^{**2**} können beispielsweise Methacryloxy-, Acryloxy-, Vinyloxy-, Ethylenoxy- oder Styrylgruppen sein. Beispiele für die Alkoxysiloxygruppen **R**^{**2**} sind Trialkoxysiloxy- oder Alkyldialkoxysiloxygruppen, deren Alkyl- und Alkoxyreste 1 bis 8 Kohlenstoffatome besitzen. Beispiele für geeignete Alkylreste und die in den Alkoxyresten vorhandenen Alkylreste sind nachstehend bei den Resten **R** aufgeführt. Vorzugsweise besitzen die Alkyl- und Alkoxyreste 1, 2 oder 3 Kohlenstoffatome.

Als Substituenten für die substituierten Arylene und substituierten Cycloalkylene **A**^{**1**}, **A**^{**2**}, **A**^{**3**}, **A**^{**4**}, **A**^{**5**}, **A**^{**6**} und **A**^{**7**} sind Halogenatome, C₁- bis C₄-Alkyl- oder Alkoxyreste, Nitro- oder Cyanogruppen bevorzugt.

Vorzugsweise betragen die Summen **a + b** und **c + d** jeweils 1 oder 2.

Beispiele für **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Alkenylreste, wie der Vinyl-, Allyl- und der 3-Butenylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Als Substituenten für die substituierten Kohlenwasserstoffe sind die Halogenatome, Nitro- oder Cyanogruppen bevorzugt.

Bevorzugt als Reste **R** sind C₁- bis C₄-Alkylreste und Phenylreste, insbesondere Methylreste.

Als Halogenatome kommen Fluor, Chlor, Brom und Iod in Frage, insbesondere Fluor, Chlor und Brom.

Vorzugsweise sind **e** und **g** jeweils eine ganze Zahl im Wert von mindestens 1, insbesondere mindestens 2. Vorzugsweise sind **f**, **h**, **i** und **j** jeweils eine ganze Zahl von 0 bis 35. Vorzugsweise beträgt die Summe **e + f** mindestens **4** und höchstens 15. Vorzugsweise beträgt die Summe **g + h** mindestens 2 und höchstens 35. Vorzugsweise beträgt die Summe **i + j** höchstens 10.

Beispiele für geeignete gesättigte oder olefinisch ungesättigte Alkyl-, Alkoxy- oder Cycloalkylreste mit jeweils 1-16 Kohlenstoffatomen **A**^{**8**} sind vorstehend bei den Resten **R** aufgeführt. Vorzugsweise besitzen die Alkyl- und Alkoxyreste 1 bis 8 Kohlenstoffatome.
Beispiele für substituierte Reste **A**^{**8**} sind Cyanalkylreste, wie der 2-Cyanethylrest, Halogenalkylreste, insbesondere Perfluoralkylreste, wie der Heptafluorpropylrest, Halogenarylreste, wie der o-, m-, und p-Chlorphenylrest und Cyanoarylreste, wie der Cyanophenylrest.

Als Substituenten sind die Halogenatome, Nitro- oder Cyanogruppen bevorzugt.

Vorzugsweise beträgt die Summe **x + y + z** 1, 2 oder 3.

Vorzugsweise beträgt die Summe **t + u** 1 oder 2.

Bevorzugt als Verbindungen der allgemeinen Formel (1) sind diejenigen Dianhydrohexit-Derivate, in denen **M**^{**1**}, nämlich die allgemeine Formel (2), die allgemeine Formeln (8) 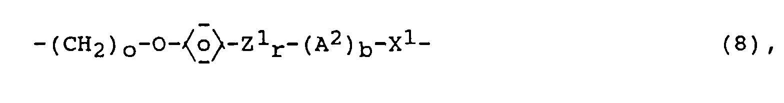 bedeutet, in der
**o** die Zahl 3 oder 4 bedeutet und
**Z**^{**1**}**, A**^{**2**}, **X**^{**1**}, **r** und **b** die vorstehenden Bedeutungen aufweisen.

Vorzugsweise bedeutet **Hexit** Dianhydrosorbit oder Dianhydromannit.

Insbesondere bevorzugt als Verbindungen der allgemeinen Formel (7) sind diejenigen der allgemeinen Formel (9) 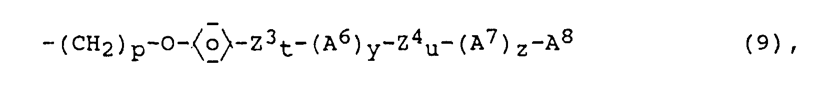 in der
**p** die Zahl 3 oder 4 bedeutet und
**Z**^{**3**}, **Z**^{**4**}, **A**^{**6**}, **A**^{**7**}, **A**^{**8**}, **t**, **u**, **y** und **z** die vorstehenden Bedeutungen aufweisen.

Vorzugsweise hat **t** den Wert 1 und **y** und **z** jeweils den Wert 0 oder 1. Falls **y** den Wert 1 besitzt kann **u** den Wert 0 oder 1 besitzen, falls **y** den Wert 0 besitzt hat **u** den Wert 0.

Die Dianhydrohexit-Derivate enthaltenden flüssigkristallinen Organosiloxane können hergestellt werden durch Umsetzung von Organosiloxanen und/oder zu Organosiloxanen kondensierbaren Organosilanen mit mesogene Gruppen aufweisenden Alkenen oder Alkinen der nachstehend beschriebenen allgemeinen Formel (14) und gegebenenfalls der nachstehend beschriebenen allgemeinen Formel (15), wobei die Organosiloxane und mindestens ein Teil der Organosilane mindestens ein direkt an Silicium gebundenes Wasserstoffatom aufweisen.

In einem bevorzugten Verfahren zur Herstellung von Dianhydrohexit-Derivate enthaltenden flüssigkristallinen Organosiloxanen der bevorzugten vorstehenden allgemeinen Formeln (4)-(6), werden Organosiloxane der allgemeinen Formeln (10) bis (12) 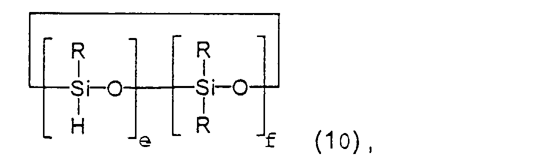 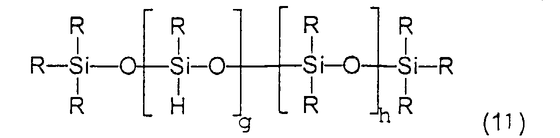 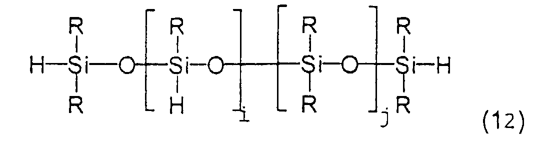 und/oder Organosilane der allgemeinen Formel (13)

HRSiY¹Y² (13),

mit Verbindungen der allgemeinen Formel (14)

M³- Hexit - M² (14),

und gegebenfalls Verbindungen der allgemeinen Formel (15)

R⁵-(A⁵)ₓ-Z³ ₜ-(A⁶)_{y}-Z⁴ ᵤ-(A⁷)_{z}-A⁸ (15),

umgesetzt, und, falls Organosilane der allgemeinen Formel (13) eingesetzt werden, die erhaltenen Organosilane der allgemeinen Formel (16)

BRSiY¹Y² (16),

kondensiert,
wobei in den vorstehenden Formeln (10) bis (16)
- **M**^{**3**}: einen Rest der allgemeinen Formel (17)

R⁶-(A¹)ₐ-Z¹ ᵣ-(A²)_{b}-X¹- (17),
- **Y**^{**1**}: eine kondensierbare Gruppe,
- **Y**^{**2**}: eine kondensierbare Gruppe oder einen Rest **R**
- **R**^{**5**} und **R**^{**6**}: jeweils einen Rest der Formel C_{α}H_{β}, in der eine oder mehrere, nicht benachbarte Methyleneinheiten durch Sauerstoffatome oder Dimethylsilylreste ersetzt sein können, und wobei
- α: die Bedeutungen von **n** und
- β: den Wert von 2α-1 oder 2α-3 besitzt, bedeuten und
**R**, **M**^{**2**}, **A**^{**1**}, **A**^{**2**}, **A**^{**5**}, **A**^{**6**}, **A**^{**7**}, **A**^{**8**}, **Z**^{**1**}, **Z**^{**3**}, **Z**^{**4**}, **B**, **X**^{**1**}, **a**, **b**, **e**, **f**, **g**, **h, i**, **j, t, u**, **r**, **x**, **y**, und **z** die vorstehenden Bedeutungen aufweisen.

Vorzugsweise bedeuten **Y**^{**1**} und **Y**^{**2**}, falls **Y**^{**2**} nicht **R** bedeutet, ein Halogenatom oder eine C₁- bis C₄-Alkoxygruppe, insbesondere ein Chloratom oder eine Methoxy- oder Ethoxygruppe.

In den vorstehenden allgemeinen Formeln (15) und (17) sind **R**^{**5**} und **R**^{**6**} in der Endstellung ungesättigt. Vorzugsweise hat **α** die Werte 3 bis 7, insbesondere die Werte 3 und 4.

Besonders bevorzugte Verbindungen der allgemeinen Formel (15) sind diejenigen der allgemeinen Formel (18) 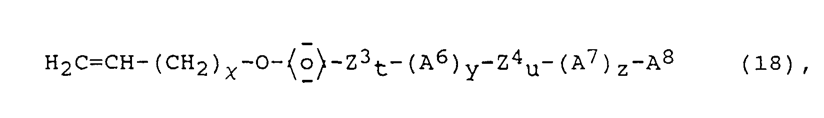 in der
χ die Zahl 1 oder 2 bedeutet und
**Z**^{**3**}, **Z**^{**4**}, **A**^{**6**}, **A**^{**7**}, **A**^{**8**}, **t**, **u**, **y** und **z** die vorstehenden Bedeutungen aufweisen.

Die Verbindungen der allgemeinen Formeln (14) und (15) lassen sich direkt an Silicium gebundene Wasserstoffatome hydrosilylieren.

Die vorstehend für die allgemeinen Formeln (4) bis (6) angegebenen bevorzugten Werte und Summen für **e**, **f**, **g**, **h**, **i** und **j** gelten auch für die allgemeinen Formeln (10) bis (12).

Die Umsetzung von direkt an Silicium gebundene Wasserstoffatome aufweisende Organosiloxanen und/oder zu Organosiloxanen kondensierbaren Organosilanen mit Alkenen oder Alkinen der allgemeinen Formeln (14) und (15) erfolgt in an sich bekannter Weise, z.B. durch Hydrosilylierung in Lösungsmitteln, wie Kohlenwasserstoffen, Ethern oder Estern mit Metallen oder Verbindungen der Platingruppe als Katalysator. Geeignete Verfahren zur Hydrosilylierung sind beispielsweise in der EP-A-358 208 beschrieben. Bevorzugt werden 0,1 bis 10 Mol, insbesondere 0,2 bis 2 Mol, von Verbindungen der allgemeinen Formeln (1) und (7) pro Grammatom direkt an Siliciumatome gebundene Wasserstoffatome bei der Hydrosilylierung eingesetzt.

Werden im vorstehend geschilderten Verfahren Organosilane, beispielsweise der allgemeinen Formel (13), eingesetzt, so werden diese gemeinsam mit Dianhydrohexit-Derivate der allgemeinen Formel (1) enthaltenden Organosilanen oder Organosiloxanen nach an sich bekannten Verfahren zu flüssigkristallinen Organosiloxanen kondensiert. Dies kann u. a. durch Umsetzung mit Säuren, wie wäßriger Salzsäure, erfolgen. Derartige Verfahren sind beschrieben in W.Noll: Chemistry and Technology of Silicones, Academic Press, Orlando Fla., 1968, Seite 191 bis 239. Durch die beschriebenen Reaktionen erhält man ein Gemisch unterschiedlicher Moleküle.

Die Dianhydrohexit-Derivate der allgemeinen Formel (14), sind Zwischenprodukte bei der Herstellung der flüssigkristallinen Dianhydrohexit-Derivate enthaltenden Organosiloxane. Die Synthese der Dianhydrohexit-Derivate kann beispielsweise nach folgendem Verfahren erfolgen: Dianhydrohexit wird mit einer Carbonsäure oder einem Carbonsäurechlorid, in die bereits nach in der organischen Chemie bekannten Verfahren eine olefinische oder acetylenische Gruppe eingeführt wurde, in einem inerten Lösungsmittel bei Raumtemperatur oder bei erhöhter Temperatur, gegebenenfalls unter Zusatz von aktivierenden, wasserbindenden oder säurebindenden Hilfsstoffen, nach an sich bekannten Verfahren verestert.

Die neuen Organosilane der vorstehenden allgemeinen Formel (16) sind als Zwischenprodukte bei der Herstellung der flüssigkristallinen Organosiloxane ebenfalls Gegenstand der vorliegenden Erfindung.

Die flüssigkristallinen Dianhydrohexit-Derivate enthaltenden Organosiloxane können auf verschiedene Weise in optischen Elementen, für dekorative Zwecke und als polarisierende Farbfilter, insbesondere Notch-Filter, verwendet werden. Sie erlauben es, den rechts- oder linkshändig polarisierten Anteil des Lichts in bestimmten vorgegebenen Spektralbereichen zu reflektieren.

Für die vorstehende Anwendung können sowohl Mischungen der Dianhydrohexit-Derivate enthaltenden flüssigkristallinen Organosiloxane untereinander als auch Mischungen der Organosiloxane mit anderen flüssigkristallinen Materialien, mit Materialien, die die flüssigkristallinen Eigenschaften nicht wesentlich negativ beeinflussen oder reine Dianhydrohexit-Derivate enthaltende Organosiloxane genutzt werden. Insbesondere können auch Mischungen mit anderen flüssigkristallinen Substanzen verwendet werden, wodurch eine Abstimmung der Reflexionswellenlänge zwischen beispielsweise 400 nm rechtshelikal über infrarot rechtshelikal, nematisch (= unendlicher Pitch), infrarot linkshelikal bis 400 nm linkshelikal erfolgen kann.

Die Mischungen der flüssigkristallinen Dianhydrohexit-Derivate enthaltenden Organosiloxane untereinander und mit anderen flüssigkristallinen Materialien sind ebenfalls Gegenstand dieser Erfindung. Weitere Bestandteile derartiger Gemische können beispielsweise monomere flüssigkristalline Methacrylsäure- und/oder Acrylsäureester sein. Die flüssigkristallinen Mischungen aus methacryloxy- und/oder acryloxygruppen aufweisenden Komponenten können nach an sich bekannten Verfahren polymerisiert und bei geeigneter Wahl der Komponenten auch vernetzt werden.

Die flüssigkristallinen Dianhydrohexit-Derivate enthaltenden Organosiloxane, welche in den mesogenen Resten der allgemeinen Formeln (1) und/oder (7) Methacryloxy- und/oder Acryloxygruppen aufweisen, können dreidimensional vernetzt werden. Diese Vernetzung wird vorzugsweise mittels freier Radikale bewirkt, welche durch Peroxide, durch UV-Licht oder durch energiereichere elektromagnetische Strahlung als UV-Licht, oder thermisch erzeugt werden. Die Vernetzung kann aber auch mittels direkt an Siliciumatome gebundene Wasserstoffatome enthaltende Vernetzer unter Katalyse oben genannter Platinmetallkatalysatoren bewirkt werden. Sie kann auch kationisch oder anionisch erfolgen. Besonders bevorzugt ist die Vernetzung durch UV-Licht. Diese Vernetzung ist in der US-A 5,211,877 beschrieben.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20°C;
d) HTP = helical twisting power;
e) WOR = Reflexionswellenlänge
f) LC = Flüssigkristall
g) ABChol = 4-Allyloxybenzoesäurecholesterinester
h) ABDor = 4-Allyloxybenzoesäuredoristerylester

Es wurden beispielsweise die Dianhydrohexit-Derivate 1-5 hergestellt. Sie können nach der folgenden, allgemeinen Arbeitsvorschrift hergestellt werden:
24 mmol Isosorbid und 48 mmol eines ω-Alkenyloxy- bzw. ω-Alkinyloxy-Säurechlorids werden in 40 ml Toluol gelöst und 12 Stunden zum Rückfluß erhitzt. Das Toluol wird im Vakuum abdestilliert und das Rohprodukt aus Ethanol bzw. Isopropanol umkristallisiert.

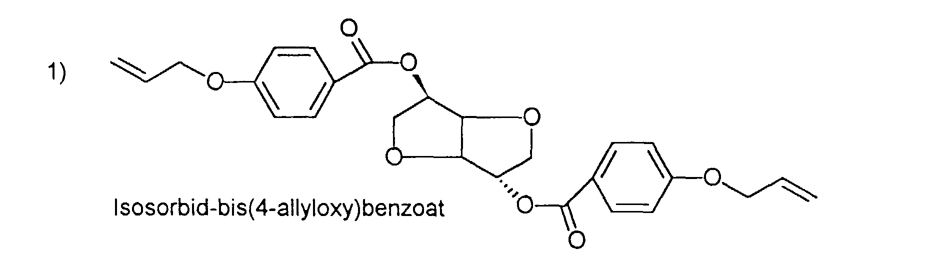

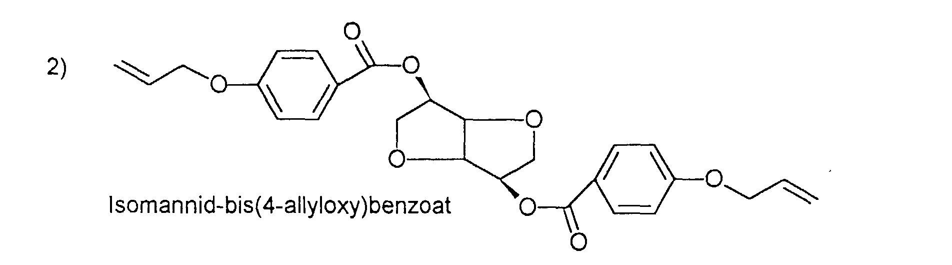

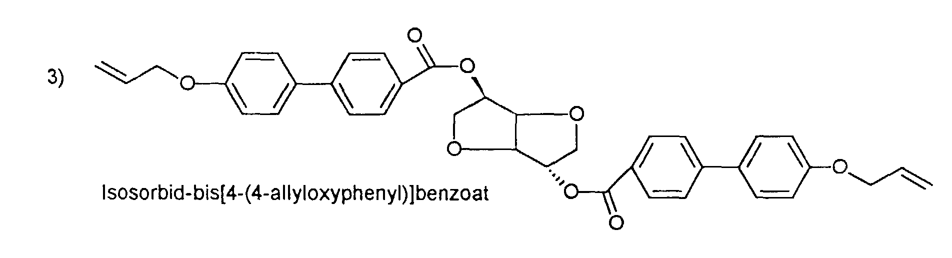

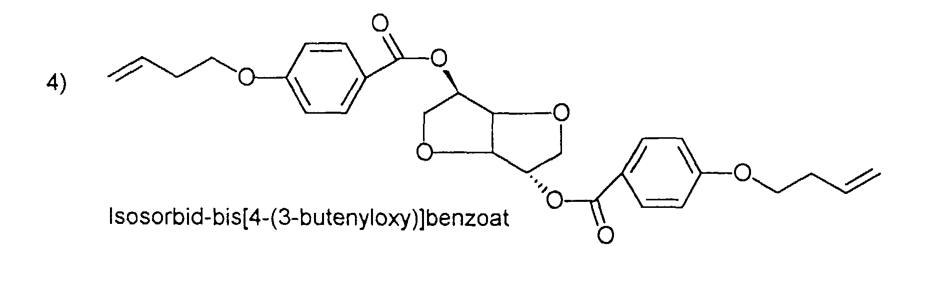

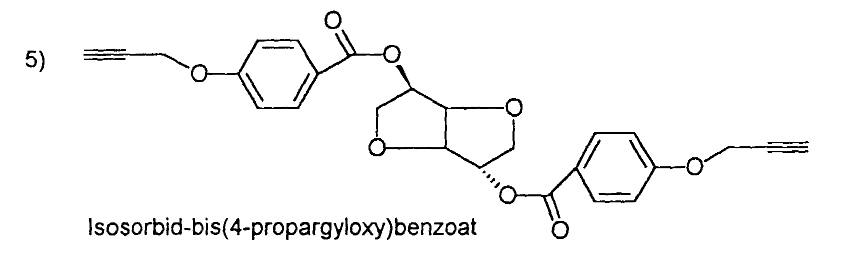

Das Dianhydrohexit-Derivat 6 wurde nach der folgenden Vorschrift hergestellt:
5 g (12.95 mmol) Isosorbid-bis(4-hydroxy)benzoat und 3 ml Triethylamin werden in 50 ml Aceton gelöst und zu dieser Mischung bei 5-10 °C 3 g (28.7 mmol) Methacrylsäurechlorid getropft. Man rührt 2 Stunden bei Raumtemperatur, gießt auf Eis und säuert mit verdünnter HCl an. Die Mischung wird zweimal mit je 50 ml tert.-Butyl-methylether extrahiert, die vereinigten organischen Phasen neutral gewaschen und über Natriumsulfat getrocknet. Das Lösungsmittel wird im Vakuum abdestilliert und das Rohprodukt über Kieselgel säulenchromatographisch gereinigt (Eluent: Petrolether/Ethylacetat 2:1). Ausbeute: 2.34 g.

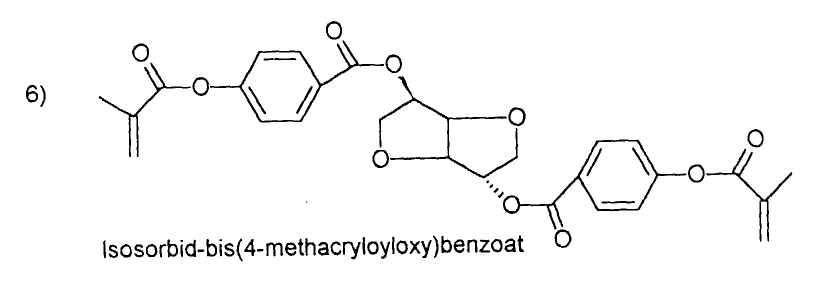

### Beispiel 1 (Hydrosilylierung gegenüber Dotierung mit Monomeren)

Mischt man zum Hydrosilylierungsprodukt von Pentamethylcyclopentasiloxan und 4-Allyloxybenzoesäure-4-cyanophenylester 2.73 Gew-% Isosorbid-bis(4-allyloxy)benzoat resultiert eine Reflexionswellenlänge von 927 nm. Werden jedoch 4-Allyloxybenzoesäure-4-cyanophenylester und Isosorbid-bis(4-allyloxy)benzoat gemeinsam an Pentamethylcyclopentasiloxan hydrosilyliert, so resultiert bei einer Isosorbid-Derivat Konzentration von 2.73 Gew-% im Produkt eine Reflexionswellenlänge von 698 nm, d.h. eine Verschiebung von über 200 nm zu kürzerwelligem Licht.

0.07 g (0.15 mmol) Isosorbid-bis(4-allyloxy)benzoat (2 Mol-%, das entspricht 2.73 Gew.-% im fertigen LC) und 2 g (7.17 mmol) 4-Allyloxybenzoesäure-4-cyanophenylester werden in Toluol gelöst, mit 0.49 g (1.63 mmol) Pentamethylcyclopentasiloxan und 200 ppm Dicyclopentadienyl-Platindichlorid versetzt und die Mischung 2 Stunden zum Rückfluß erhitzt. Das Lösungsmittel wird im Vakuum abdestilliert. Der resultierende Flüssigkristall zeigt eine cholesterische Phase. Nach der Präparation zwischen 2 Glasplatten ergibt sich bei Raumtemperatur eine WOR von 698 nm. Es wird rechtszirkular polarisiertes Licht reflektiert.

### Vergleichsbeispiel 1-1 (Zumischung von Isosorbid-bis(4-allyloxy)benzoat):

Zu 9.727 g Hydrosilylierungsprodukt von 4-Allyloxybenzoesäure-4-cyanophenylester an Pentamethylcyclopentasiloxan werden 0.273 g Isosorbid-bis(4-allyloxy)benzoat (2.73 Gew.-%) gemischt und die resultierende, cholesterische Mischung zwischen 2 Glasplatten präpariert. Es ergibt sich eine WOR bei Raumtemperatur von 927 nm. Es wird rechtszirkular polarisiertes Licht reflektiert.

### Vergleichsbeispiel 1-2 (Zumischung von Isosorbid-bis(4-methacryloyloxy)benzoat):

Zu 204.14 mg Hydrosilylierungsprodukt von 4-Allyloxybenzoesäure-4-cyanophenylester an Pentamethylcyclopentasiloxan werden 5.75 mg Isosorbid-bis(4-methacryloyloxy)benzoat (2.74 Gew-%) gemischt und die resultierende, cholesterische Mischung zwischen 2 Glasplatten präpariert. Es ergibt sich eine WOR bei Raumtemperatur von 1031 nm. Es wird rechtszirkular polarisiertes Licht reflektiert.

### Beispiel 2 (Verwendung von Isosorbid gegenüber ABDor)

0.48 g (2.0 mmol) Tetramethylcyclotetrasiloxan, 2 g (7.17 mmol) (95 Mol-%) 4-Allyloxybenzoesäure-4-cyanophenylester und 0.19 g (0.38 mmol) (5 Mol-%) Isosorbid-bis(4-(3-butenyloxy)benzoat) werden in 20 ml Toluol gelöst und mit 200 ppm Dicyclopentadienyl-Platindichlorid versetzt. Man erhitzt 2 Stunden zum Rückfluß und destilliert anschließend das Lösungsmittel im Vakuum ab. Der resultierende Flüssigkristall hat nach Präparation zwischen 2 Glasplatten eine WOR von 427 nm. Es wird rechtszirkular polarisiertes Licht reflektiert.

### Vergleichsbeispiel 2 (Isosorbid-bis(4-(3-butenyloxy)benzoat) wird durch ABDor ersetzt) :

An Tetramethylcyclotetrasiloxan werden 95 Mol-% 4-Allyloxybenzoesäure-4-cyanophenylester und 5 Mol-% 4-Allyloxybenzoesäuredoristerylester analog Beispiel 2 hydrosilyliert. Der resultierende, cholesterische Flüssigkristall hat nach Präparation zwischen 2 Glasplatten eine WOR von 1800 nm. Es wird rechtszirkular polarisiertes Licht reflektiert.

### Beispiel 3 (Verwendung von Isomannid gegenüber ABChol bzw. Weinsäurebenzoat)

An Pentamethylcyclopentasiloxan werden 67 Mol-% 4-Allyloxybenzoesäurebiphenylester, 30 Mol-% 4-Allyloxybenzoesäurecholesterinester und 3 Mol-% Isomannid-bis(4-allyloxy)benzoat analog Beispiel 2 hydrosilyliert. Der resultierende Flüssigkristall hat nach Präparation zwischen 2 Glasplatten eine WOR von 515 nm. Es wird linkszirkular polarisiertes Licht reflektiert.

### Vergleichsbeispiel 3-1 (3 Mol-% Isomannid-bis(4-allyloxy)benzoat werden durch ABChol ersetzt) :

An Pentamethylcyclopentasiloxan werden 67 Mol-% 4-Allyloxybenzoesäurebiphenylester und 33 Mol-% 4-Allyloxybenzoesaurecholesterinester analog Beispiel 2 hydrosilyliert. Der resultierende, cholesterische Flüssigkristall hat nach Präparation zwischen 2 Glasplatten eine WOR von 670 nm. Es wird linkszirkular polarisiertes Licht reflektiert.

### Vergleichsbeispiel 3-2 (3 Mol-% Isomannid-bis(4-allyloxy)benzoat werden durch (3R,4R)-(+)-Allyl-3,4-bis(benzoyloxy)succinimid ersetzt) :

An Pentamethylcyclopentasiloxan werden 67 Mol-% 4-Allyloxybenzoesäurebiphenylester, 30 Mol-% 4-Allyloxybenzoesäurecholesterinester und 3 Mol-% (3R,4R)-(+)-Allyl-3,4-bis(benzoyloxy)succinimid analog Beispiel 2 hydrosilyliert. Der resultierende, cholesterische Flüssigkristall hat nach Präparation zwischen 2 Glasplatten eine WOR von 580 nm. Es wird linkszirkular polarisiertes Licht reflektiert.

### Beispiel 4 (Verwendung von Isosorbid gegenüber ABDor)

An Pentamethylcyclopentasiloxan werden 40 Mol-% 4-Allyloxybenzoesäure-4-methoxyphenylester, 40 Mol-% 4-Allyloxybenzoesäurebiphenylester, 18 Mol-% 4-Allyloxybenzoesäuredoristerylester und 2 Mol-% Isosorbid-bis(4-allyloxy)benzoat analog Beispiel 2 hydrosilyliert. Der resultierende Flüssigkristall hat nach Präparation zwischen 2 Glasplatten eine WOR von 432 nm. Es wird rechtszirkular polarisiertes Licht reflektiert.

### Vergleichsbeispiel 4 (Isosorbid-bis(4-allyloxy)benzoat wird durch ABDor ersetzt) :

An Pentamethylcyclopentasiloxan werden 40 Mol-% 4-Allyloxybenzoesäure-4-methoxyphenylester, 40 Mol-% 4-Allyloxybenzoesäurebiphenylester und 20 Mol-% 4-Allyloxybenzoesäuredoristerylester analog Beispiel 2 hydrosilyliert. Der resultierende, cholesterische Flüssigkristall hat nach Präparation zwischen 2 Glasplatten eine WOR von 562 nm. Es wird rechtszirkular polarisiertes Licht reflektiert.

### Beispiel 5 (Verwendung Isomannid gegenüber ABChol)

1.0 g (3.33 mmol) Pentamethylcyclopentasiloxan, 3.37 g (6.16 mmol) (37 Mol-%) 4-Allyloxybenzoesäurecholesterinester und 1.1 g (3.33 mmol) (20 Mol-%) 4-Allyloxybenzoesäurebiphenylester werden in 20 ml Toluol gelöst und die Reaktionsmischung zusammen mit 100 ppm Dicyclopentadienyl-Platindichlorid 1 Stunde zum Rückfluß erhitzt. Man kühlt auf 50 °C ab, fügt 2.3 g (6.8 mmol) (40 Mol-%) 4-Allyloxybenzoesäure-4-(methacryloyloxy)phenylester, 0.23 g (0.49 mmol) (3 Mol-%) Isomannid-bis(4-allyloxy)benzoat und 10 mg Aluminiumsalz von N-Nitrosophenylhydroxylamin hinzu und rührt 1 Stunde bei 70°C. Das Lösungsmittel wird im Vakuum abdestilliert. Der resultierende, cholesterische Flüssigkristall hat nach Präparation zwischen 2 Glasplatten eine WOR von 516 nm. Es wird linkszirkular polarisiertes Licht reflektiert.

### Vergleichsbeispiel 5 (Isomannid-bis(4-allyloxy)benzoat wird durch ABChol ersetzt)

An Pentamethylcyclopentasiloxan werden 40 Mol-% 4-Allyloxybenzoesäurecholesterinester, 20 Mol-% 4-Allyloxybenzoesäurebiphenylester und 40 Mol-% 4-Allyloxybenzoesäure-4-(methacryloyloxy)phenylester analog Beispiel 6 hydrosilyliert. Der resultierende, cholesterische Flüssigkristall hat nach Präparation zwischen 2 Glasplatten eine WOR von 623 nm. Es wird linkszirkular polarisiertes Licht reflektiert.

### Beispiel 6 (Verwendung von Isosorbid gegenüber ABDor)

An Tetramethylcyclotetrasiloxan werden 95 Mol-% 4-Allyloxybenzoesäure-4-cyanophenylester und 5 Mol-% Isosorbid-bis(4-propargyloxy)benzoat analog Beispiel 2 hydrosilyliert. Der resultierende Flüssigkristall hat nach Präparation zwischen 2 Glasplatten eine WOR von 464 nm. Es wird rechtszirkular polarisiertes Licht reflektiert.

### Vergleichsbeispiel 6 (Isosorbid-bis(4-propargyloxy)benzoat wird durch ABDor ersetzt) :

identisch mit Vergleichsbeispiel 2-1

### Beispiel 7 (Vernetzung des Flüssigkristalls)

Zum Flüssigkristall aus Beispiel 5 werden 1 Gew-% 2-Methyl-1-[4-(methylthio)phenyl]-2-morpholinopropanon-1 (Irgacure 907, Fa. Ciba-Geigy) gemischt, der Flüssigkristall bei 80 °C zwischen 2 Glasplatten orientiert, 1 Stunde getempert und die Probe 3 Minuten mit UV-Licht bestrahlt. Es resultiert ein vernetzter, cholesterischer Film mit einer WOR von 520 nm. Es wird linkszirkular polarisiertes Licht reflektiert.

### Vergleichsbeispiel 7

Analog Beispiel 7 wird der Flüssigkristall aus Vergleichsbeispiel 5 vernetzt. Der cholesterische Film hat eine WOR von 603 nm. Es wird linkszirkular polarisiertes Licht reflektiert.

### Beispiel 8 (Vernetzung des Flüssigkristalls und Zusatz von monomeren Hilfsstoffen)

Zum Flüssigkristall aus Beispiel 5 werden 1 Gew-% 2-Methyl-1-[4-(methylthio)phenyl]-2-morpholinopropanon-1 (Irgacure 907, von Ciba-Geigy AG, Schweiz) und 20 Gew.-% 4-Methacryloyloxybenzoesäure-4-ethylphenylester gemischt, der Flüssigkristall bei 80 °C zwischen 2 Glasplatten orientiert, 1 Stunde getempert und die Probe 3 Minuten mit UV-Licht bestrahlt. Es resultiert ein vernetzter, cholesterischer Film mit einer WOR von 520 nm. Es wird linkszirkular polarisiertes Licht reflektiert.

### Vergleichsbeispiel 8

Analog Beispiel 8 wird der Flüssigkristall aus Vergleichsbeispiel 5 vernetzt. Der cholesterische Film hat eine WOR von 626 nm. Es wird linkszirkular polarisiertes Licht reflektiert.

### Beispiel 9 (rechtshelikaler Filter):

0.69 g (2.88 mmol) Tetramethylcyclotetrasiloxan, 2.14 g (5.3 mmol) (53 Mol-%) 4-Allyloxybenzoesäure-4-(4-methoxyphenoxycarbonyl)phenylester und 0.33 g (0.69 mmol) (7 Mol-%) Isosorbid-bis-(4-allyloxy)benzoat werden in 20 ml Toluol gelöst und die Reaktionsmischung zusammen mit 100 ppm Dicyclopentadienyl-Platindichlorid 1 Stunde zum Rückfluß erhitzt. Man kühlt auf 50 °C ab, fügt 1.35 g (6.95 mmol) (40 Mol-%) 4-Allyloxybenzoesäure-4-(methacryloyloxyphenyl)ester und 10 mg Aluminiumsalz von N-Nitrosophenylhydroxylamin hinzu und rührt 1 Stunde bei 70 °C. Das Lösungsmittel wird im Vakuum abdestilliert. Zum resultierenden, cholesterischen Flüssigkristall werden anschließend bei 70 °C 20 Gew.-% 4-Methacryloyloxybenzoesäure-4-ethylphenylester und 2 Gew.-% 2-Methyl-1-[4-(methylthio)phenyl]-2-morpholinopropanon-1 (Irgacure 907, von Ciba-Geigy AG, Schweiz) gemischt und die erhaltene Mischung bei 90 °C zwischen 2 polyimidbeschichteten Glasplatten präpariert. Nach einer Temperzeit von 1 Stunde bei 90 °C wird der Flüssigkristall mit einer UV-Lampe photovernetzt. Der erhaltene LC-Filter hat eine WOR von 631 nm.

## Patentansprüche

1. Flüssigkristalline Organosiloxane, die Dianhydrohexit-Derivate als chirale Gruppen aufweisen.

2. Flüssigkristalline Organosiloxane nach Anspruch 1, welche pro Molekül mindestens ein Si-C gebundenes Dianydrohexit-Derivat der allgemeinen Formel (1)
M¹- Hexit - M² (1),
als chirale Komponente aufweisen, in der
**Hexit** eine der vorstehenden Dianhydrohexit-Gruppen,
**M**^{**1**} einen Rest der allgemeinen Formel (2),
R¹-(A¹)ₐ-Z¹ ᵣ-(A²)_{b}-X¹- (2)
und
**M**^{**2**} einen Rest der allgemeinen Formel (2) oder einen Rest der allgemeinen Formel (3),
R²-R³-(A³)_{c}-Z² ₛ-(A⁴)_{d}-X²- (3),
bedeuten, wobei in den vorstehenden allgemeinen Formeln (2) und (3)
**R**^{**1**} und **R**^{**3**} jeweils einen Rest der Formel CₙHₘ bedeuten, wobei eine oder mehrere, nicht benachbarte Methyleneinheiten durch Sauerstoffatome oder Dimethylsilylreste ersetzt sein können,
**R**^{**2**} eine polymerisierbare ethylenisch ungesättigte oder Alkoxysiloxygruppe oder Cholesterylrest, Doristerolrest, Halogenatom, Wasserstoffatom, Hydroxyl-, Nitril-, und Trialkylsiloxygruppe, deren Alkylreste jeweils 1 bis 8 Kohlenstoffatome besitzen,
**A**^{**1**}, **A**^{**2**}, **A**^{**3**} und **A**^{**4**} gleiche oder verschiedene zweibindige Reste aus der Gruppe 1,4-Phenylen-, 1,4-Cyclohexylenreste, substituierte Arylene mit 6 bis 10 Kohlenstoffatomen, substituierte Cycloalkylene mit 3 bis 10 Kohlenstoffatomen und Heteroarylene mit 5 bis 10 Kohlenstoffatomen,
**X**^{**1**} und **X**^{**2**} gleiche oder verschiedene zweibindige Reste aus der Gruppe -OCO-, -NHCO-, -CO- oder einen Rest **R**^{**1**},
**Z**^{**1**} und **Z**^{**2**} gleiche oder verschiedene zweibindige Reste aus der Gruppe -(CH₂)_{q}-, -COO-, -CH=CH-, -N=N-, -N=N(O)-, -OCO-, -CH₂CO-, -COCH₂-, -CH₂-O-, -O-CH₂-, -CH₂-NH-, -NH-CH₂-, -CONH-, -NHCO-, -N=CH- oder -CH=N-,
**a, b, c** und **d** jeweils gleiche oder verschiedene ganze Zahler im Wert von 0, 1, 2 oder 3,
**n** eine ganze Zahl im Wert von 0 bis 20,
**m** den Wert von 2n besitzt, oder, falls n mindestens 2 bedeutet, auch den Wert von (2n-2) besitzen kann,
**q** eine ganze Zahl im Wert von 1, 2 oder 3,
**r** und **s** jeweils eine ganze Zahl im Wert von 0 oder 1 bedeuten.

3. Flüssigkristalline Organosiloxane nach Anspruch 1 oder 2, aufgebaut gemäß den allgemeinen Formeln (4) bis (6), 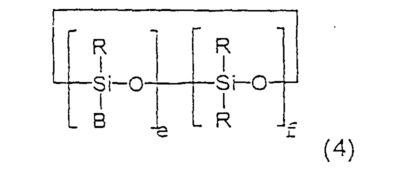 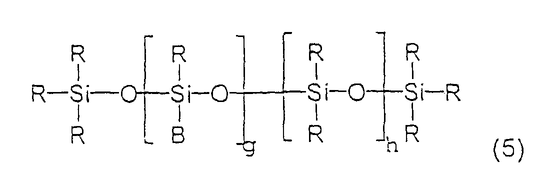 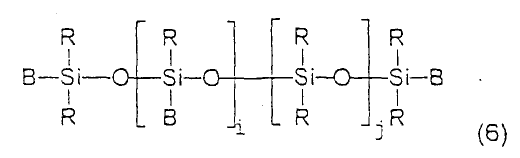 in denen
**B** einen Rest der allgemeinen Formel (1) und gegebenenfalls einen Rest der allgemeinen Formel (7)
R⁴-(A⁵)ₓ-Z³ ₜ-(A⁶)_{y}-Z⁴ ᵤ-(A⁷)_{z}-A⁸ (7),
bedeutet, wobei in den vorstehenden Formeln (4) bis (7):
**R** gleiche oder verschiedene, gegebenenfalls substituierte C₁-bis C₁₈-Kohlenwasserstoffreste,
**e** und **g** jeweils eine ganze Zahl im Wert von 1 bis 100
**f, h, i** und **j** jeweils eine ganze Zahl im Wert von 0 bis 100,
**R**^{**4**} die Bedeutungen von **R**^{**1**},
**A**^{**5**}, **A**^{**6**} und **A**^{**7**} die Bedeutungen von **A**^{**1**},
**Z**^{**3**} und **Z**^{**4**} die Bedeutungen von **Z**^{**1**},
**A**^{**8**} gesättigte oder olefinisch ungesättigte gegebenenfalls substituierte Alkyl-, Alkoxy- oder Cycloalkylreste mit jeweils 1-16 Kohlenstoffatomen, Cholestanreste, Cholesterylreste, Doristerolreste, Halogenatome, Wasserstoffatome, Hydroxyl-, Nitril-, (Meth)acryloxy-, (Meth)acryloxyethylenoxy-, (Meth)acryloxydi(ethylenoxy)-, (Meth)acryloxytri(ethylenoxy)-, R- oder S-Tetrahydrofurancarbonsäureester und Trialkyl-, oder Trialkoxysiloxygruppen, deren Alkyl- bzw. Alkoxyreste 1 bis 8 Kohlenstoffatome besitzen,
**x, y** und **z** jeweils gleiche oder verschiedene ganze Zahlen im Wert von 0, 1, 2 und 3 und
**t** und **u** die Bedeutungen von **r** aufweisen,
mit der Maßgabe, daß die Summe **e + f** mindestens 2 beträgt.

4. Verfahren zur Herstellung von Dianhydrohexit-Derivate enthaltenden flüssigkristallinen Organosiloxane gemäß einem der Ansprüche 1 bis 3, bei dem Organosiloxane der allgemeinen Formeln (10) bis (12) 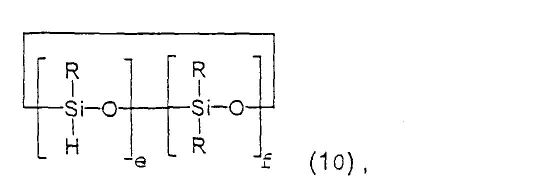 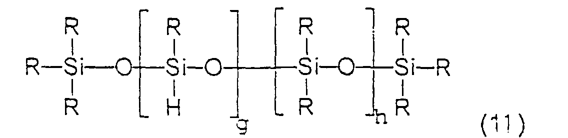 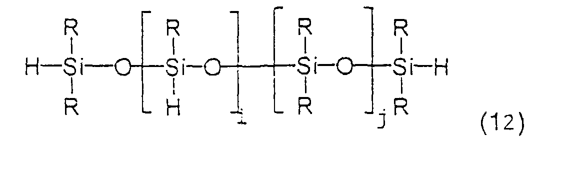 und/oder Organosilane der allgemeinen Formel (13)
HRSiY¹Y² (13),
mit Verbindungen der allgemeinen Formel (14)
M³- Hexit - M² (14),
und gegebenfalls Verbindungen der allgemeinen Formel (15)
R⁵-(A⁵)ₓ-Z³ ₜ-(A⁶)_{y}-Z⁴ ᵤ-(A⁷)_{z}-A⁸ (15),
umgesetzt werden, und, falls Organosilane der allgemeinen Formel (13) eingesetzt werden, die erhaltenen Organosilane der allgemeinen Formel (16)
BRSiY¹Y² (16),
kondensiert werden,
wobei in den vorstehenden Formeln (10) bis (16)
**M**^{**3**} einen Rest der allgemeinen Formel (17)
R⁶-(A¹)ₐ-Z¹ ᵣ-(A²)_{b}-X¹- (17),
**Y**^{**1**} eine kondensierbare Gruppe,
**Y**^{**2**} eine kondensierbare Gruppe oder einen Rest **R**
**R**^{**5**} und **R**^{**6**} jeweils einen Rest der Formel C_{α}H_{β}, in der eine oder mehrere, nicht benachbarte Methyleneinheiten durch Sauerstoffatome oder Dimethylsilylreste ersetzt sein können, und wobei
α die Bedeutungen von **n** und
β den Wert von 2α-1 oder 2α-3 besitzt, bedeuten und
**R**, **M**^{**2**}, **A**^{**1**}, **A**^{**2**}, **A**^{**5**}, **A**^{**6**}, **A**^{**7**}, **A**^{**8**}, **Z**^{**1**}, **Z**^{**3**}, **Z**^{**4**}, **B**, **X**^{**1**}, **a**, **b**, **e**, **f**, **g**, **h, i**, **j**, **t, u, r**, **x**, **y**, und **z** die vorstehenden Bedeutungen aufweisen.

5. Mischungen der flüssigkristallinen Organosiloxane gemäß Anspruch 1 bis 3 untereinander und mit anderen flüssigkristallinen Materialien.

6. Verwendung der flüssigkristallinen Organosiloxane gemäß Anspruch 1 bis 3 oder der Mischungen gemäß Anspruch 5 in optischen Elementen, als polarisierende Farbfilter und für dekorative Zwecke.

7. Organosilane der allgemeinen Formel (16)
BRSiY¹Y² (16),
in der
**Y**^{**1**} und **Y**^{**2**} die in Anspruch 4 angegebenen Bedeutungen aufweisen.

## Claims

1. Liquid-crystalline organosiloxane containing dianhydrohexitol derivatives as chiral groups.

2. Liquid-crystalline organosiloxane according to Claim 1, which contains, per molecule, at least one Si-C-bound dianhydrohexitol derivative of the formula (1)
M¹-hexitol-M² (1),
as chiral component, where
**hexitol** denotes one of the above dianhydrohexitol groups,
**M**^{**1**} is a radical of the formula (2)
R¹-(A¹)ₐ-Z¹ ᵣ-(A²)_{b}-X¹- (2)
and
**M**^{**2**} is a radical of the formula (2) or a radical of the formula (3)
R²-R³-(A³)_{c}-Z² ₛ-(A⁴)_{d}-X²- (3)
where, in the above formulae (2) and (3),
**R**^{**1**} and **R**^{**3**} are each a radical of the formula CₙHₘ, in which one or more nonadjacent methylene units may be replaced by oxygen atoms or dimethylsilyl radicals,
**R**^{**2**} is a polymerizable ethylenically unsaturated or alkoxysiloxy group or cholesteryl radical, doristerol radical, halogen atom, hydrogen atom, hydroxyl group, nitrile group or trialkylsiloxy group whose alkyl radicals each have 1 to 8 carbon atoms,
**A**^{**1**}**, A**^{**2**}**, A**^{**3**} and **A**^{**4**} are identical or different divalent radicals from the group consisting of 1,4-phenylene, 1,4-cyclohexylene, substituted arylene having 6 to 10 carbon atoms, substituted cycloalkylene having 3 to 10 carbon atoms or heteroarylene having 5 to 10 carbon atoms,
**X**^{**1**} and **X**^{**2**} are identical or different divalent radicals from the group consisting of -OCO-, -NHCO-, -CO- or a radical **R**^{**1**},
**Z**^{**1**} and **Z**^{**2**} are identical or different divalent radicals from the group consisting of -(CH₂)_{q}-, -COO-, -CH=CH-, -N=N-, -N=N(O)-, -OCO-, -CH₂CO-, -COCH₂-, -CH₂-O-, -O-CH₂-, -CH₂-NH-, -NH-CH₂-, -CONH-, -NHCO-, -N=CH- or -CH=N-,
**a, b, c** and **d** are each identical or different integers having a value of 0, 1, 2 or 3,
**n** is an integer having a value of from 0 to 20,
**m** has the value 2n or, if n is at least 2, can also have the value (2n-2),
**q** is an integer having a value of 1, 2 or 3, and
**r** and **s** are each an integer having a value of 0 or 1.

3. Liquid-crystalline organosiloxane according to Claim 1 or 2, built up in accordance with the formulae (4) to (6), 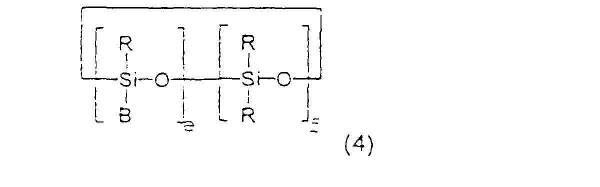 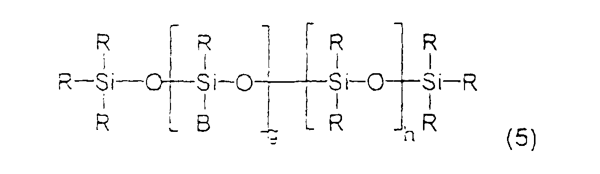 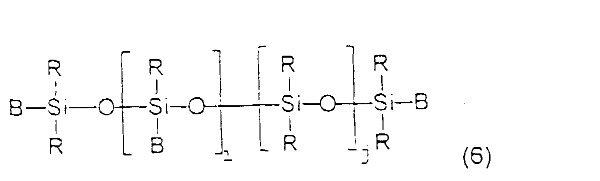 where
**B** is a radical of the formula (1) or a radical of the formula (7)
R⁴-(A⁵)ₓ-Z³ ₜ-(A⁶)_{y}-Z⁴ ᵤ-(A⁷)_{z}-A⁸ (7),
where, in the above formulae (4) to (7),
**R** are identical or different, substituted or unsubstituted C₁- to C₁₈-hydrocarbon radicals,
**e** and **g** are each an integer having a value from 1 to 100,
**f, h, i** and **j** are each an integer having a value from 0 to 100,
**R**^{**4**} is as defined for **R**^{**1**},
**A**^{**5**}**, A**^{**6**} and **A**^{**7**} are as defined for **A**^{**1**},
**Z**^{**3**} and **Z**^{**4**} are as defined for **Z**^{**1**},
**A**^{**8**} are saturated or olefinically unsaturated, substituted or unsubstituted alkyl, alkoxy or cycloalkyl radicals, each having 1-16 carbon atoms, cholestane radicals, cholesteryl radicals, doristerol radicals, halogen atoms, hydrogen atoms, hydroxyl groups, nitrile groups, (meth)acryloxy groups, (meth)acryloxyethyleneoxy groups, (meth)acryloxydi(ethyleneoxy) groups, (meth)acryloxytri(ethyleneoxy) groups, R- or S-tetrahydrofurancarboxylate groups or trialkyl- or trialkoxysiloxy groups whose alkyl or alkoxy radicals respectively have 1 to 8 carbon atoms,
**x, y** and **z** are each identical or different integers having a value of 0, 1, 2 or 3, and
**t** and **u** are as defined for r,
with the proviso that the sum **e** + **f** is at least 2.

4. Process for the preparation of liquid-crystalline organosiloxanes containing dianhydrohexitol derivatives according to one of Claims 1 to 3, in which organosiloxanes of the formula (10) to (12) 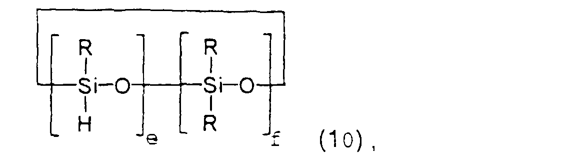 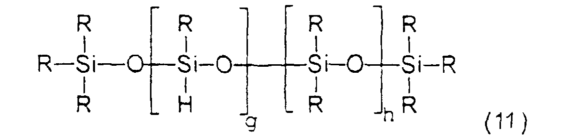 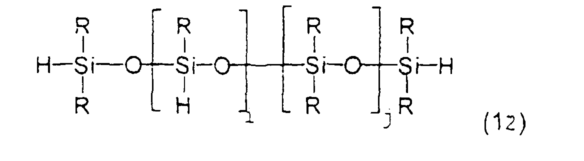 and/or organosilanes of the formula (13)
HRSiY¹Y² (13)
are reacted with compounds of the formula (14)
M³-hexitol - M² (14),
and, if desired, compounds of the formula (15)
R⁵-(A⁵)ₓ-Z³ ₜ-(A⁶)_{y}-z⁴ ᵤ-(A⁷)_{z}-A⁸ (15),
and, if organosilanes of the formula (13) are employed, the resultant organosilanes of the formula (16)
BRSiY¹Y² (16)
are condensed,
where, in the above formulae (10) to (16),
**M**^{**3**} is a radical of the formula (17)
R⁶-(A¹)ₐ-Z¹ ᵣ-(A²)_{b}-X¹- (17)
**Y**^{**1**} is a condensable group,
**Y**^{**2**} is a condensable group or a radical **R**
**R**^{**5**} and **R**^{**6**} are each a radical of the formula C_{α}H_{β}, in which one or more nonadjacent methylene units may be replaced by oxygen atoms or dimethylsilyl radicals, and where
α is as defined for **n**, and
β has the value 2α-1 or 2α-3, and
**R, M**^{**2**}**, A**^{**1**}**, A**^{**2**}**, A**^{**5**}**, A**^{**6**}**, A**^{**7**}**, A**^{**8**}**, Z**^{**1**}**, Z**^{**3**}**, Z**^{**4**}**, B, X**^{**1**}**, a, b, e, f, g, h, i, j, t, u, r, x, y** and **z** are as defined above.

5. Mixture of liquid-crystalline organosiloxanes according to Claims 1 to 3 with one another and with other liquid-crystalline materials.

6. Use of the liquid-crystalline organosiloxane according to Claims 1 to 3 or of the mixture according to Claim 5 in optical elements, as polarizing coloured filters or for decorative purposes.

7. Organosilane of the formula (16)
BRSiY¹Y² (16)
in which
**Y**^{**1**} and **Y**^{**2**} are as defined in Claim 4.

## Revendications

1. Organosiloxanes cristallins liquides renfermant des dérivés de dianhydrohexitol en tant que groupes chiraux.

2. Organosiloxanes cristallins liquides selon la revendication 1, qui renferment, par molécule, en tant que composant chiral, au moins un dérivé de dianhydrohexitol lié à Si-C de formule générale (1)
M¹-hexitol-M² (1),
dans laquelle
hexitol représente l'un des groupes dianhydrohexitol ci-dessus,
M¹ représente un radical de formule générale (2),
R¹-(A¹)ₐ-Z¹ ᵣ-(A²)_{b}-X¹- (2)
et
M² représente un radical de formule générale (2) ou un radical de formule générale (3)
R²-R³(A³)_{c}-Z² ₛ-(A⁴)_{d}-X²- (3),
où dans les formules générales (2) et (3) ci-dessus,
R¹ et R³ représentent chacun un radical de formule CₙHₘ, un ou plusieurs motifs méthylène non adjacents pouvant être remplacés par des atomes d'oxygène ou des radicaux diméthylsilyle,
R² représente un groupe polymérisable éthyléniquement insaturé ou alcoxysiloxy ou un radical cholestéryle, un radical doristérol, un atome d'halogène, un atome d'hydrogène, un groupe hydroxy, un groupe nitrile et un groupe trialkylsiloxy dont les radicaux alkyle ont chacun de 1 à 8 atomes de carbone,
A¹, A², A³ et A⁴ représentent des radicaux bivalents identiques ou différents, choisis parmi le groupe constitué des radicaux 1,4-phénylène, 1,4-cyclohexylène, d'arylènes substitués ayant de 6 à 10 atomes de carbone, de cycloalkylènes substitués ayant de 3 à 10 atomes de carbone et d'hétéroarylènes ayant de 5 à 10 atomes de carbone,
X¹ et X² représentent des radicaux bivalents identiques ou différents choisis parmi le groupe constitué de -OCO-, -NHCO-, -CO- ou un radical R¹,
Z¹ et Z² représentent des radicaux bivalents identiques ou différents choisis parmi le groupe constitué de -(CH₂)_{q}-, -COO-, -CH=CH-, -N=N-, -N=N(O)-, -OCO-, -CH₂CO-, -COCH₂-, -CH₂-O-, -O-CH₂-, -CH₂-NH-, -NH-CH₂-, -CONH-, -NHCO-, -N=CH-, ou -CH=N-,
a, b, c et d représentent chacun des entiers identiques ou différents valant 0, 1, 2 ou 3,
n représente un entier valant de 0 à 20,
m vaut 2n ou, si n vaut au moins 2, peut également valoir (2n-2),
g représente un entier valant 1, 2 ou 3,
r et s représentent chacun un entier valant 0 ou 1.

3. Organosiloxanes cristallins liquides selon la revendication 1 ou 2 dont la structure est selon les formules générales (4) à (6), 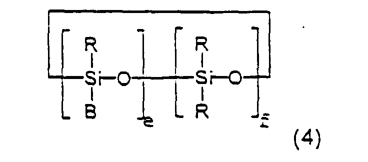 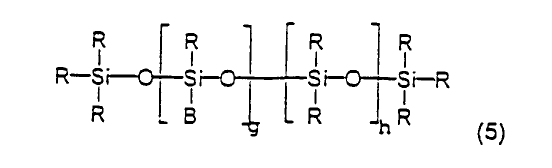 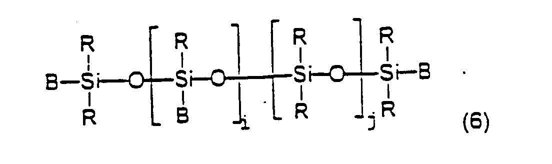 dans lesquelles
B représente un radical de formule générale (1) et éventuellement un radical de formule générale (7)
R⁴-(A⁵)ₓ-Z³ ₜ-(A⁶)_{y}-Z⁴ ᵤ-(A⁷)_{z}-A⁸ (7),
où dans les formules (4) à (7) ci-dessus :
R représente des radicaux hydrocarbonés en C₁ à C₁₈ identiques ou différents, éventuellement substitués,
e et g représentent chacun un entier valant de 1 à 100,
f, h, i et j représentent chacun un entier valant de 0 à 100,
R⁴ est comme défini pour R¹,
A⁵, A⁶ et A⁷ sont comme définis pour A¹,
Z³ et Z⁴ sont comme définis pour Z¹,
A⁸ représente des radicaux alkyle, alcoxy ou cycloalkyle saturés ou oléfiniquement insaturés, éventuellement substitués, ayant chacun 1-16 atomes de carbone, des radicaux cholestane, des radicaux cholestéryle, des radicaux doristérol, des atomes d'halogène, des atomes d'hydrogène, des groupes hydroxy, des groupes nitrile, des groupes (méth)acryloxy, des groupes (méth)acryloxyéthylène-oxy, des groupes (méth)acryloxydi(éthylène-oxy), des groupes (méth)acryloxytri(éthylène-oxy), des groupes R- ou S-tétrahydrofuranecarboxylate ou des groupes trialkyl- ou trialcoxysiloxy, dont les radicaux alkyle ou alcoxy ont de 1 à 8 atomes de carbone,
x, y et z représentent chacun des entiers identiques ou différents valant 0, 1, 2 et 3 et
t et u sont comme définis pour r,
à condition que la somme e + f vaille au moins 2.

4. Procédé de préparation d'organosiloxanes cristallins liquides renfermant des dérivés de dianhydrohexitol selon l'une quelconque des revendications 1 à 3, dans lequel on fait réagir des organosiloxanes de formules générales (10) à (12) 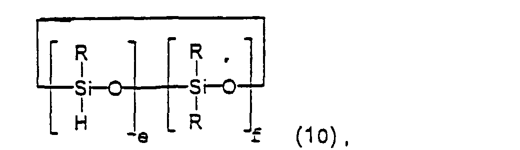 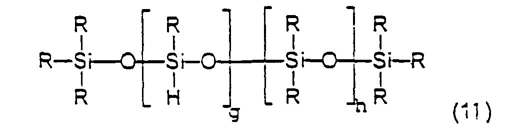 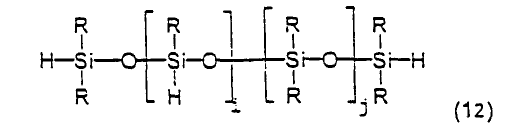 et/ou des organosilanes de formule générale (13)
HRSiY¹Y² (13)
avec des composés de formule générale (14)
M³-hexitol-M² (14),
et éventuellement des composés de formule générale (15)
R⁵-(A⁵)ₓ-Z³ ₜ-(A⁶)_{y}-Z⁴ ᵤ-(A⁷)_{z}-A⁸ (15),
et, si on utilise des organosilanes de formule générale (13), on condense les organosilanes obtenus de formule générale (16)
BRSiY¹Y² (16),
où dans les formules (10) à (16) ci-dessus
M³ représente un radical de formule générale (17)
R⁶-(A¹)ₐ-Z¹ ᵣ-(A²)_{b}-x¹- (17),
Y¹ représente un groupe condensable,
Y² représente un groupe condensable ou un radical R,
R⁵ et R⁶ représentent chacun un radical de formule C_{α}H_{β}, dans laquelle un ou plusieurs motifs méthylène non adjacents peuvent être remplacés par des atomes d'oxygène ou des radicaux diméthylsilyle, et où
α est comme défini pour n et
β vaut 2α-1 ou 2α-3, et
R, M², A¹, A², A⁵, A⁶, A⁷, A⁸, Z¹, Z³, Z⁴, B, X¹, a, b, e, f, g, h, i, j, t, u, r, x, y, et z sont comme définis ci-dessus.

5. Mélanges d'organosiloxanes cristallins liquides selon les revendications 1 à 3 les uns avec les autres et avec d'autres matériaux cristallins liquides.

6. Utilisation des organosiloxanes cristallins liquides selon les revendications 1 à 3 ou des mélanges selon la revendication 5 dans des éléments optiques, en tant que filtres colorés polarisants ou à des fins décoratives.

7. Organosilanes de formule générale (16)
BRSiY¹Y² (16),
dans laquelle
Y¹ et Y² sont comme définis à la revendication 4.
